# EUROPÄISCHE PATENTSCHRIFT

(11) **EP 4 600 115 B1**
(45) Veröffentlichungstag und Bekanntmachung des Hinweises auf die Patenterteilung: **28.01.2026**
(21) Anmeldenummer: 25155617.1
(22) Anmeldetag: 03.02.2025
(51) Int. Cl.: B62D 5/04

(54) **AKTUATOREINHEIT FÜR EIN LENKSYSTEM EINES KRAFTFAHRZEUGS UND LENKSYSTEM FÜR EIN KRAFTFAHRZEUG**
ACTUATOR UNIT FOR A STEERING SYSTEM OF A MOTOR VEHICLE AND STEERING SYSTEM FOR A MOTOR VEHICLE
UNITÉ D'ACTIONNEMENT POUR UN SYSTÈME DE DIRECTION D'UN VÉHICULE AUTOMOBILE ET SYSTÈME DE DIRECTION POUR UN VÉHICULE AUTOMOBILE

(30) Priorität: 06.02.2024 BE 202405079
(43) Veröffentlichungstag der Anmeldung: 13.08.2025
(73) Patentinhaber: thyssenkrupp Presta Aktiengesellschaft, 9492 Eschen (LI); thyssenkrupp AG, 45143 Essen (DE)
(72) Erfinder: Hámori, Botond, 1026 Budapest (HU); Szepessy, Imre, 9493 Mauren (LI)
(74) Vertreter: thyssenkrupp Intellectual Property GmbH

(56) Entgegenhaltungen:
- DE-A1- 102021 214 426
- DE-A1- 102022 202 556

## Beschreibung

### Stand der Technik

Die Erfindung betrifft eine Aktuatoreinheit für ein Lenksystem eines Kraftfahrzeugs, umfassend ein Steuergehäuse, in dem eine elektrische Steuereinheit aufgenommen ist, von der eine motorische Antriebseinheit ansteuerbar ist, die mit dem Steuergehäuse ausgebildet ist zum mechanischen Antrieb eines entlang einer Aktuatorachse erstreckten Aktuatorelements relativ zum Steuergehäuse, wobei das Steuergehäuse eine Ausnehmung aufweist, welche sich über einen Umfangsabschnitt um die Aktuatorachse erstreckt.

Ein elektrisches Hilfskraft-Lenksystem oder ein Steer-by-wire-Lenksystem eines Kraftfahrzeugs weist mindestens eine derartige Aktuatoreinheit auf, deren Funktion darin besteht, ein elektrisches Steuersignal in eine mechanische Stellgröße umzuwandeln, beispielsweise in eine mechanische Verstellung oder die Erzeugung einer Kraft oder eines Drehmoments. In einem Steer-by-Wire-Lenksystem kann eine Aktuatoreinheit beispielsweise einen elektro-motorischen Lenksteller umfassen, der elektrische Lenk-Steuerbefehle in einen Lenkeinschlag von lenkbaren Rädern umsetzt, oder einen Feedback-Aktuator, der ein motorisches Feedback-Moment in eine manuelle Lenkeingabevorrichtung einkoppeln kann, um eine von der Fahrsituation abhängige mechanische Rückmeldung von den lenkbaren Rädern zu simulieren und dadurch ein realistisches Fahrgefühl zu erzeugen.

Eine Aktuatoreinheit der eingangs genannten Art weist eine Steuereinheit, die auch als ECU (electronic control unit) bezeichnet wird, die eine elektronische Steuerschaltung umfasst, welche ausgebildet ist, Steuersignale von der Fahrzeugsteuerung zu empfangen und abhängig davon einen elektrischen Motor der Antriebseinheit der Aktuatoreinheit anzusteuern. In der gattungsgemäßen Bauform ist die Steuereinheit in einem Steuergehäuse untergebracht, welches räumlich möglichst in der Nähe des Motors angeordnet ist. So ist es im Stand der Technik beispielsweise aus der US 8,063,594 B2 bekannt, das Steuergehäuse zusammen mit dem Motorgehäuse des Motors integriert auszubilden.

Bei der vorgenannten Aktuatoreinheit ist die Motorwelle des Motors axial aus dem Steuergehäuse herausgeführt, wobei ein Aktuatorelement antriebsmäßig axial mit dem Motor verbunden werden kann. Dadurch, dass die Steuereinheit neben dem Motor angeordnet ist, wird jedoch relativ viel Bauraum beansprucht, und die Möglichkeiten zur Ankopplung eines Aktuatorelements sind eingeschränkt. Es ist insbesondere nicht oder nur mit hohem konstruktivem Aufwand möglich, die Aktuatoreinheit zum Antrieb eines in Richtung eines Aktuatorachse erstreckten Aktuatorelement einzusetzen, welches je nach der Ausgestaltung und dem konkreten Einsatzzweck linear in Richtung der Aktuatorachse verschiebar sein kann - wie beispielsweise die Zahnstange einer Zahnstangenlenkung - oder auch um die Aktuatorachse drehend antreibbar sein kann - wie beispielsweise bei einem Feedback-Antrieb einer manuell drehbaren Lenkspindel einer Lenksäule.

Eine Aktuatoreinheit der eingangs genannten Art ist beispielsweise aus der die Merkmale des Oberbegriffs des unabhängigen Anspruchs offenbarenden DE 10 2021 214426 A1 oder der DE 10 2022 202556 A1 bekannt.

Angesichts der vorangehend erläuterten Problematik ist es eine Aufgabe der vorliegenden Erfindung, eine kompakte Bauweise und flexiblere Einsatzmöglichkeiten mit geringem konstruktiven Aufwand zu ermöglichen.

### Darstellung der Erfindung

Diese Aufgabe wird erfindungsgemäß gelöst durch die Aktuatoreinheit mit den Merkmalen des Anspruchs 1 und das Lenksystem gemäß Anspruch 10. Vorteilhafte Weiterbildungen ergeben sich aus den Unteransprüchen.

Bei einer Aktuatoreinheit für ein Lenksystem eines Kraftfahrzeugs, umfassend ein Steuerrungsgehäuse, in dem eine elektrische Steuereinheit aufgenommen ist, von der eine motorische Antriebseinheit ansteuerbar ist, die mit dem Steuergehäuse ausgebildet ist zum mechanischen Antrieb eines entlang einer Aktuatorachse erstreckten Aktuatorelements relativ zum Steuergehäuse, wobei das Steuergehäuse eine Ausnehmung aufweist, welche sich über einen Umfangsabschnitt um die Aktuatorachse erstreckt, ist erfindungsgemäß vorgesehen, dass die Ausnehmung sich bezüglich der Aktuatorachse über einen Umfangsbereich von kleiner gleich 180° erstreckt.

Die Ausnehmung ist konkav ausgebildet und quer, d.h. in radialer Richtung bezüglich der Aktuatorachse von außen in das Steuergehäuse eingeformt. Dabei ist die Ausnehmung radial offen ausgestaltet und umschließt bzw. umgreift die Aktuatorachse über einen Umfangsteilbereich, beispielsweise mit einem im Wesentlichen konzentrisch um die Aktuatorachse umlaufenden Abschnitt. Dies kann bevorzugt dadurch realisiert sein, dass die Ausnehmung einen im Wesentlichen C-förmigen oder gabelförmigen Querschnitt aufweist. Der offene Querschnitt kann axial bezüglich der Aktuatorachse, also in Achsrichtung bevorzugt im Wesentlichen gleichbleibend durchgehend ausgebildet sein. Dadurch kann das Steuergehäuse die Aktuatorachse über einen axialen Abschnitt umgreifen, welcher der Dicke des Aktuatorgehäuses in axialer Richtung gemessen entspricht.

Ein entlang der Aktuatorachse axial erstrecktes Aktuatorelement kann durch die Antriebseinheit um die Aktuatorachse drehend antreibbar sein, so dass es innerhalb der erfindungsgemäßen Ausnehmung rotiert, beispielsweise eine Lenkwelle eines Feedback-Aktuators, oder eine Lenkachse eines Lenkstellers. Es ist ebenfalls möglich, dass das Aktuatorelement relativ zum Steuergehäuse axial in Richtung der Aktuatorachse linear verlagerbar ist, beispielsweise analog der Verschiebung einer Zahnstange im Lenkgetriebe einer Zahnstangenlenkung. Dadurch sind flexible Einsatzmöglichkeiten für unterschiedliche Anwendungen in Lenksystemen von Kraftfahrzeugen realisierbar. Ein weiterer Vorteil dabei ist, dass durch das erfindungsgemäß im Bereich der Ausnehmung praktisch in das Steuergehäuse eingebettete Aktuatorelement eine verbesserte Ausnutzung des zur Verfügung stehenden Bauraums möglich ist.

Erfindungsgemäß ist vorgesehen, dass die Ausnehmung sich bezüglich der Aktuatorachse über einen Umfangsbereich von kleiner gleich 180° erstreckt. Durch ein Umgreifen über maximal 180° ist dadurch, dass in radialer Richtung gesehen keinerlei Hinterschnitte vorhanden sind, eine besonders einfache und sichere Montage gewährleistet. Dabei kann in vorteilhafter Weise zumindest eine Hälfte des um den Umfang des Aktuatorelements erstreckten Raums als Bauraum für die Steuereinheit genutzt werden.

Es ist vorteilhaft, dass die Ausnehmung sich bezüglich der Aktuatorachse über einen Umfangsbereich von mehr als 90° erstreckt. Dabei kann die Innenwandung der Ausnehmung ein entlang der Aktuatorachse erstrecktes Aktuatorelement über mindestens einen Viertelkreis umschließen. Bereits dadurch ist eine signifikant kompaktere Bauform als bei einem kastenförmigen oder zylindrischen Steuergehäuse wie im Stand der Technik möglich.

Es kann bevorzugt vorgesehen sein, dass die Steuereinheit eine quer zur Aktuatorachse flächig erstreckte Platine aufweist. Die Platine, gleichbedeutend auch als Leiterplatte bezeichnet, weist eine bevorzugt ebene Trägerplatte aus elektrisch isolierendem Material auf, beispielsweise aus Epoxydharz oder dergleichen, auf der elektronische Bauelemente angebracht sind, die zur Ausbildung der Steuerschaltung der Steuereinheit über Leiterbahnen miteinander verschaltet sind. In der erfindungsgemäßen Anordnung erstreckt sich die Platine normal, d.h. senkrecht zur Aktuatorachse. Die Platine ist in dem Innenraum des Steuergehäuses angeordnet.

Bei der vorgenannten Ausführung ist es vorteilhaft, dass die Platine an die Ausnehmung des Steuergehäuses angepasst ausgebildet ist. Die Platine ist in dem Innen- oder Aufnahmeraum des Steuergehäuses aufgenommen, dessen Form und Abmessungen durch die äußere Form des Steuergehäuses bestimmt werden, wobei der Innenraum durch eine Gehäusewandung zur Ausnehmung hin begrenzt ist. Im Bereich der von außen in das Steuergehäuse konkav eingeformten Ausnehmung weist der Innenraum entsprechend eine quer von der Aktuatorachse aus vorstehende Einbuchtung auf. Zur optimalen Ausnutzung des zur Aufnahme der Steuereinheit zur Verfügung stehenden Innenraums ist es vorteilhaft, dass die Platine eine Aussparung aufweist, welche an die Ausnehmung des Steuergehäuses angepasst ist. Die Aussparung ist entsprechend bezüglich Form und Abmessungen an die in den Innenraum vorstehende Einbuchtung angepasst. Bevorzugt kann dazu vorgesehen sein, dass die Platine zusammen mi dem Steuergehäuse die Aktuatorachse über einen Umfangsbereich umgreift. Dadurch kann der Vorteil realisiert sein, dass die Steuereinheit den durch die erfindungsgemäße Ausnehmung gewonnenen Bauraum optimal ausnutzt.

Es ist bevorzugt möglich, dass an dem Steuergehäuse ein elektrischer Motor der Antriebseinheit angebracht ist. Bevorzugt kann das Motorgehäuse des Motors mechanisch an dem Steuergehäuse fixiert sein, beispielsweise mittels einer Flanschverbindung oder dergleichen.

Es kann vorgesehen sein, dass der Motor eine mit Abstand parallel zur Aktuatorachse angeordnete Motorachse aufweist. Zwischen der entlang der Motorachse ersteckten Motorwelle und dem entlang der Aktuatorachse erstreckten Aktuatorelement kann bevorzugt ein Getriebe angeordnet sein. Dieses ist ausgelegt, um eine Drehung der Motorwelle in die geforderte Bewegung des Aktuatorelements umzusetzen, und kann entsprechend ein Zahnrad- oder Riemengetriebe, einen Spindeltrieb oder andere Getriebearten umfassen. Dabei ist es vorteilhaft, dass durch die erfindungsgemäße Ausgestaltung in jedem Fall die geforderte Aktuatorbewegung realisierbar ist.

Es kann vorgesehen sein, dass die Steuereinheit sich zwischen der Motorachse und der Ausnehmung erstreckt. Dadurch kann der Bauraum optimal genutzt werden.

Es ist möglich, dass das Aktuatorelelement von der Antriebseinheit um die Aktuatorachse drehend antreibbar ist. Dadurch kann ein Rotations-Aktuator realisiert sein, beispielsweise für den drehenden Antrieb der Lenkwelle eines Feedback-Aktuators.

Alternativ kann vorgesehen sein, dass das Aktuatorelelement von der Antriebseinheit in Richtung der Aktuatorachse linear verlagerbar ist. Dadurch kann ein Linear-Aktuator realisiert sein, beispielsweise ein über Spurstangen an Achsschenkel gekoppelter Lenkungsaktuator analog zu einer Zahnstangenlenkung.

Die Erfindung umfasst weiterhin ein Lenksystem für ein Kraftfahrzeug, umfassend mindestens eine Eingabeeinheit zur Eingabe von Lenkbefehlen, und eine elektrische Aktuatoreinheit, die eine mit einer Steuereinheit verbundene elektrische Antriebseinheit aufweist und die ausgebildet ist zur Umsetzung elektrischer Steuersignale in eine mechanische Bewegung eines Aktuatorelements, wobei erfindungsgemäß vorgesehen ist, dass die Aktuatoreinheit ausgebildet gemäß einer der vorangehend beschriebenen Ausführungsformen oder Kombinationen davon.

Es ist beispielsweise möglich, dass die Aktuatoreinheit einen Lenksteller aufweist. Die Aktuatoreinheit kann mit einem Lenkungsantrieb wirkverbunden sein, um abhängig von Steuerbefehlen einen mechanischen Lenkeinschlag von lenkbaren Rädern zu erzeugen. Es kann beispielsweise analog zum bekannten Wirkprinzip einer Zahnstangenlenkung vorgesehen sein, dass ein linear axial verlagerbares Aktuatorelement über Spurstangen an Achsschenkel von lenkbaren Rädern einer Vorderachse oder Hinterachse angelenkt ist. Alternativ ist es auch denkbar und möglich, dass ein drehend antreibbares Aktuatorelement an die Lenkachse eines lenkbaren Rads angekoppelt ist, beispielsweise zur Realisierung eine Einzelradlenkung.

Es ist möglich, dass die Aktuatoreinheit mit einem Lenkeingabemittel wirkverbunden ist.

Das Lenkeingabemittel kann beispielsweise eine Lenksäule umfassen, die zur Eingabe manueller Lenkbefehle eine drehbar gelagerte Lenkspindel aufweist, an der eine Lenkhandhabe wie ein Lenkrad oder dergleichen angebracht ist. Die Drehachse der Lenkspindel korrespondiert mit der Aktuatorachse, d.h. die Lenkspindel ist mit einem drehend antreibbaren Aktuatorelement gekuppelt. Die Aktuatoreinheit dient zur Einkopplung eines fahrsituationsabhängigen Feedback-Moments in die Lenkspindel. Ein derartiger Feedback-Aktuator dient zur Erzeugung eines realistischen Fahrgefühls in Steer-by-Wire-Lenksystemen, die keine mechanische Verbindung zwischen der manuellen Lenkhandhabe und den zu lenkenden Rädern aufweisen.

Es kann vorgesehen sein, dass es als Hilfskraftlenkung oder Steer-by-Wire-Lenksystem ausgebildet ist. Der wesentliche Unterschied dieser Anwendungen besteht darin, dass bei einer reinen Steer-by-Wire-Lenkung keine mechanische Verbindung zwischen einem manuellen Lenkeingabemittel und den zu lenkenden Rädern vorhanden ist. Wie oben bereits ausgeführt ist, besteht ein wesentlicher Vorteil der Erfindung darin, dass eine einfache konstruktive Anpassung an unterschiedliche funktionale und bauliche Anforderungen erfolgen kann, beispielsweise zur Realisierung von Lenkaktuatoren, oder auch Feedback-Aktuatoren oder dergleichen.

### Beschreibung der Zeichnungen

Vorteilhafte Ausführungsformen der Erfindung werden im Folgenden anhand der Zeichnungen näher erläutert. Im Einzelnen zeigen:
- Fig. 1: eine schematische Darstellung eines Steer-by-Wire-Lenksystems,
- Fig. 2: eine schematische Darstellung eines Kraftfahrzeugs mit einem Steer-by-Wire-Lenksystem,
- Fig. 3: eine perspektivische Teilansicht einer erfindungsgemäßen Aktuatoreinheit,
- Fig. 4: eine schematisch auseinander gezogene Darstellung der Aktuatoreinheit gemäß Fig.3.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

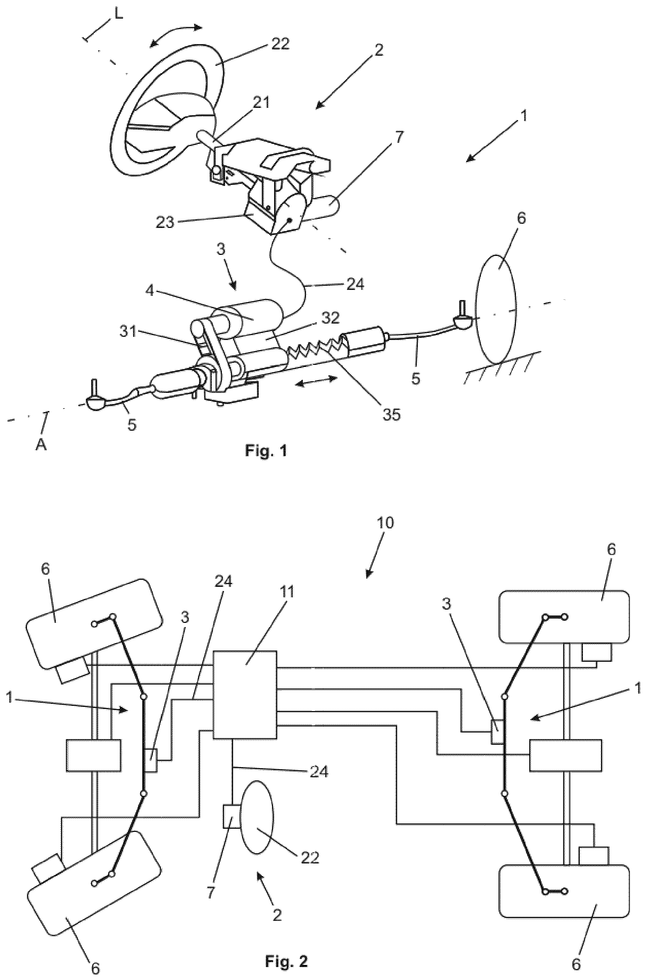

Fig. 1 zeigt ein Lenksystem 1, welches als Steer-by-Wire-Lenksystem 1 ausgebildet ist, schematisch in einer Gesamtansicht. Dieses umfasst eine Lenksäule 2, in der eine Lenkspindel 21 um eine Längsachse L drehbar gelagert ist. An dieser ist dem bezüglich der Fahrtrichtung hinteren Ende ein Lenkrad 22 angebracht, welches zur Eingabe manueller Lenkbefehle in die Lenkspindel 21 gedreht werden kann, wie mit dem Doppelpfeil angedeutet ist.

Von einer Drehsensoreinheit 23 kann der in die Lenkspindel 21 manuell eingegebene Lenkwinkel und gegebenenfalls das manuelle Lenkmoment erfasst und in ein elektrisches Steuersignal umgesetzt werden, welches über eine Steuerleitung 24 ausgegeben werden kann.

Ein elektromotorischer Lenkaktuator 3 ist an die Steuerleitung 24 angeschlossen und umfasst einen elektrischen Motor 4, der von der Drehsensoreinheit 23 ansteuerbar ist. Abhängig von den Steuersignalen erzeugt der Motor 4 ein Antriebsmoment.

Das Antriebsmoment des Motors 4 wird über ein Getriebe 31 in eine Längsbewegung einer relativ zu einem Steuergehäuse 32 längsverschieblich gelagerten Aktuatorstange 35, beispielsweise einer Gewindespindel oder eine Zahnstange, umgesetzt. Diese mit den Doppelpfeilen angedeutete Längsbewegung erfolgt axial in Richtung einer Aktuatorachse A, und wird jeweils über eine Spurstange 5 jeweils auf einen Achsschenkel eines zu lenkenden Rads 6 übertragen.

Es kann weiterhin ein Feedback-Aktuator 7 vorgesehen sein, der mit der Lenksäule 2 verbunden ist und ausgebildet ist, um ein Feedback-Moment in die Lenkspindel 21 einzukoppeln. Hierzu kann ähnlich wie bei dem Lenkaktuator 3 ein elektrischer Motor mit der Lenkspindel 21 gekuppelt sein, wobei die Aktuatorachse in diesem Fall durch die Längsachse L gegeben ist.

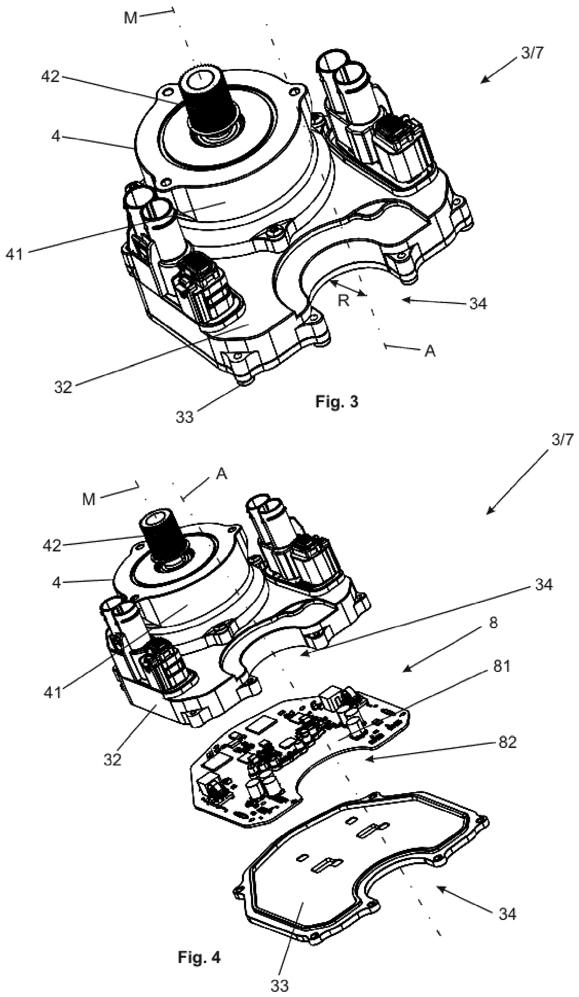

Die Aktuatoren 3 und 7, nämlich der oder die Lenkaktuatoren 3 und/oder der Feedback-Aktuator 7 können erfindungsgemäß ausgestaltet sein. Hierzu kann ein in den Fig. 3 und 4 gezeigter Aufbau realisiert sein. Nachfolgend ist der prinzipielle Aufbau anhand des Aktuators 3 erläutert, wobei die funktionalen Elemente sinngemäß auch bei einem Aktuator 7 realisiert sein können. Dabei zeigt Fig.3 den zusammengebauten Zustand, und Fig.4 eine schematisch axial in Richtung der Aktuatorachse A auseinander gezogene Darstellung.

Der Aktuator 3 weist ein Steuergehäuse 32 auf, welches einen axial - in Fig. 3 und 4 nach unten offenen Innenraum aufweist, der durch einen Deckel 33 dicht verschlossen ist.

Das Steuergehäuse 32 weist erfindungsgemäß eine Ausnehmung 34 auf, die bezüglich der Aktuatorachse A konkav, konkret in etwa halbkreisförmig mit einem Radius R um die Aktuatorachse A eingeformt ist. Dadurch umgreift das Steuergehäuse 32 die Aktuatorachse A über einen Umfangsabschnitt von etwa 180°. Anders ausgedrückt ist es in etwa C-förmig ausgestaltet.

Der offene Querschnitt der Ausnehmung 34 geht axial in Richtung der Aktuatorachse A gleichbleibend durch.

In dem Innenraum des Steuergehäuses 32 ist eine elektrische Steuereinheit 8 angeordnet, die auf einer flächenhaften, im Wesentlichen ebenen Platine 81 aufgebaut ist, die sich quer zur Aktuatorachse A erstreckt. Wie in Fig.4 gut erkennbar ist, ist die äußere Form der Platine 81 an die Form des Steuergehäuses 32 angepasst, und weist im Bereich der Ausnehmung 34 eine korrespondierende Aussparung 82 auf.

Ein elektrischer Motor 4 weist ein Motorgehäuse 41 auf, welches mit dem Steuergehäuse 32 wie im Beispiel über eine Flanschverbindung verbunden sein kann, und in dem eine Motorwelle 42 um eine Motorachse M drehend antreibbar gelagert ist. Diese Motorachse M verläuft mit Abstand parallel zur Aktuatorachse A.

Ein erfindungsgemäßes Aktuatorelement, beispielsweise eine Aktuatorstange 35 oder eine Lenkspindel 21, können entlang der Aktuatorachse A (bzw. der Längsachse L) in der Ausnehmung 34 angeordnet sein. Über ein geeignetes Getriebe 31, welches in Fig 3 und 4 zur besseren Übersicht weggelassen ist, kann der Motors 4 einen rotatorischen Antrieb um die Aktuatorachse A erzeugen, beispielsweise einen drehenden Feedback-Antrieb der Lenkspindel 21 um die Längsachse L, oder auch einen linearen Antrieb in Richtung der Aktuatorachse A, beispielsweise eine lineare Verlagerung der Aktuatorstange 35.

Durch die Ausnehmung 34 ist ein kompakter und flexibel einsetzbarer Aufbau möglich.

### Bezugszeichenliste

- 1: Lenksystem
- 10: Kraftfahrzeug
- 11: Zentralsteuereinheit
- 2: Lenksäule
- 21: Lenkspindel
- 22: Lenkrad
- 23: Drehsensoreinheit
- 24: Steuerleitung
- 3: Lenkaktuator
- 31: Getriebe
- 32: Steuergehäuse
- 33: Deckel
- 34: Ausnehmung
- 35: Aktuatorstange
- 4: Motor
- 41: Motorgehäuse
- 42: Motorwelle
- 5: Spurstange
- 6: Rad
- 7: Feedback-Aktuator
- 8: Steuereinheit
- 81: Platine
- L: Längsachse
- M: Motorachse
- A: Aktuatorachse
- R: Radius

## Patentansprüche

1. Aktuatoreinheit (3) für ein Lenksystem (1) eines Kraftfahrzeugs, umfassend ein Steuergehäuse (32), in dem eine elektrische Steuereinheit (8) aufgenommen ist, von der eine motorische Antriebseinheit (4) ansteuerbar ist, die mit dem Steuergehäuse (32) ausgebildet ist zum mechanischen Antrieb eines entlang einer Aktuatorachse (A) erstreckten Aktuatorelements (35) relativ zum Steuergehäuse (32),
wobei das Steuergehäuse (32) eine Ausnehmung (34) aufweist, welche sich über einen Umfangsabschnitt um die Aktuatorachse (A) erstreckt,
**dadurch gekennzeichnet,**
**dass** die Ausnehmung (34) sich bezüglich der Aktuatorachse (A) über einen Umfangsbereich von kleiner gleich 180° erstreckt.

2. Aktuatoreinheit nach Anspruch 1, **dadurch gekennzeichnet, dass** die Ausnehmung (34) sich bezüglich der Aktuatorachse (A) über einen Umfangsbereich von mehr als 90° erstreckt.

3. Aktuatoreinheit nach einem der vorangehenden Ansprüche, **dadurch gekennzeichnet, dass** die Steuereinheit (8) eine quer zur Aktuatorachse (A) flächig erstreckte Platine (81) aufweist.

4. Aktuatoreinheit nach Anspruch 3, **dadurch gekennzeichnet, dass** die Platine (81) an die Ausnehmung (34) des Steuergehäuses (32) angepasst ausgebildet ist.

5. Aktuatoreinheit nach einem der vorangehenden Ansprüche, **dadurch gekennzeichnet, dass** an dem Steuergehäuse (32) ein elektrischer Motor (4) der Antriebseinheit angebracht ist.

6. Aktuatoreinheit nach Anspruch 5, **dadurch gekennzeichnet, dass** der Motor (4) eine mit Abstand parallel zur Aktuatorachse (A) angeordnete Motorachse (M) aufweist.

7. Aktuatoreinheit nach Anspruch 6, **dadurch gekennzeichnet, dass** die Steuereinheit (8) sich zwischen der Motorachse (M) und der Ausnehmung (34) erstreckt.

8. Aktuatoreinheit nach einem der vorangehenden Ansprüche, **dadurch gekennzeichnet, dass** das Aktuatorelelement (35) von der Antriebseinheit (4) um die Aktuatorachse (L) drehend antreibbar ist.

9. Aktuatoreinheit nach einem der vorangehenden Ansprüche, **dadurch gekennzeichnet, dass** das Aktuatorelelement (35) von der Antriebseinheit (4) in Richtung der Aktuatorachse (A) linear verlagerbar ist.

10. Lenksystem (1) für ein Kraftfahrzeug, umfassend mindestens eine Eingabeeinheit (2) zur Eingabe von Lenkbefehlen, und eine elektrische Aktuatoreinheit (3, 7), die eine mit einer Steuereinheit (8) verbundene elektrische Antriebseinheit (4) aufweist und die ausgebildet ist zur Umsetzung elektrischer Steuersignale in eine mechanische Bewegung eines Aktuatorelements (35, 21),
**dadurch gekennzeichnet,**
**dass** die Aktuatoreinheit (3, 7) ausgebildet ist nach einem der Ansprüche 1 bis 9.

11. Lenksystem nach Anspruch 10, **dadurch gekennzeichnet, dass** die Aktuatoreinheit (3) einen Lenksteller aufweist.

12. Lenksystem nach Anspruch 10, **dadurch gekennzeichnet, dass** die Aktuatoreinheit (7) mit einem Lenkeingabemittel (21, 22) wirkverbunden ist.

13. Lenksystem nach einem der Ansprüche 10 bis 12, **dadurch gekennzeichnet, dass** es als Hilfskraftlenkung oder Steer-by-Wire-Lenksystem ausgebildet ist.

## Claims

1. Actuator unit (3) for a steering system (1) of a motor vehicle, comprising a control housing (32) in which there is received an electrical control unit (8), by means of which a motorized drive unit (4) which is configured with the control housing (32) for mechanically driving an actuator element (35) which extends along an actuator axis (A) relative to the control housing (32) can be controlled,
wherein the control housing (32) has a recess (34) which extends over a circumferential portion about the actuator axis (A),
**characterized in that**
the recess (34) extends with respect to the actuator axis (A) over a circumferential range of less than or equal to 180°.

2. Actuator unit according to Claim 1, **characterized in that** the recess (34) extends with respect to the actuator axis (A) over a circumferential range of more than 90°.

3. Actuator unit according to any one of the preceding claims, **characterized in that** the control unit (8) has a printed circuit board (81) which extends in a planar manner transversely relative to the actuator axis (A).

4. Actuator unit according to Claim 3, **characterized in that** the printed circuit board (81) is configured to be adapted to the recess (34) of the control housing (32).

5. Actuator unit according to any one of the preceding claims, **characterized in that** an electric motor (4) of the drive unit is fitted to the control housing (32).

6. Actuator unit according to Claim 5, **characterized in that** the motor (4) has a motor axis (M) which is arranged with spacing parallel with the actuator axis (A).

7. Actuator unit according to Claim 6, **characterized in that** the control unit (8) extends between the motor axis (M) and the recess (34).

8. Actuator unit according to any one of the preceding claims, **characterized in that** the actuator element (35) can be rotatably driven by the drive unit (4) about the actuator axis (L).

9. Actuator unit according to any one of the preceding claims, **characterized in that** the actuator element (35) can be linearly displaced by the drive unit (4) in the direction of the actuator axis (A).

10. Steering system (1) for a motor vehicle, comprising at least one input unit (2) for inputting steering commands, and an electrical actuator unit (3, 7) which has an electric drive unit (4) which is connected to a control unit (8) and which is configured to convert electrical control signals into a mechanical movement of an actuator element (35, 21), **characterized in that**
the actuator unit (3, 7) is configured according to any one of Claims 1 to 9.

11. Steering system according to Claim 10, **characterized in that** the actuator unit (3) has a steering actuator.

12. Steering system according to Claim 10, **characterized in that** the actuator unit (7) is operationally connected to a steering input means (21, 22).

13. Steering system according to any one of Claims 10 to 12, **characterized in that** it is in the form of a power steering or a steer-by-wire steering system.

## Revendications

1. Unité d'actionnement (3) pour un système de direction (1) d'un véhicule automobile, comprenant un boîtier de commande (32) dans lequel est logé un module de commande électrique (8), au moyen de laquelle il est possible de commander une unité d'entraînement motorisée (4) qui est configurée avec le boîtier de commande (32) pour entraîner mécaniquement un élément d'actionnement (35) qui s'étend le long d'un axe d'actionnement (A) par rapport au boîtier de commande (32),
le boîtier de commande (32) présentant un évidement (34) qui s'étend sur une partie circonférentielle autour de l'axe d'actionnement (A),
**caractérisé en ce que**
l'évidement (34) s'étend par rapport à l'axe d'actionnement (A) sur une plage circonférentielle inférieure ou égale à 180°.

2. Unité d'actionnement selon la revendication 1, **caractérisée en ce que** l'évidement (34) s'étend par rapport à l'axe d'actionnement (A) sur une plage circonférentielle supérieure à 90°.

3. Unité d'actionnement selon l'une quelconque des revendications précédentes, **caractérisée en ce que** l'unité de commande (8) comporte une carte de circuit imprimé (81) qui s'étend de manière plane transversalement par rapport à l'axe d'actionnement (A).

4. Unité d'actionnement selon la revendication 3, **caractérisée en ce que** la carte de circuit imprimé (81) est configurée pour être adaptée à l'évidement (34) du boîtier de commande (32).

5. Unité d'actionnement selon l'une quelconque des revendications précédentes, **caractérisée en ce qu'**un moteur électrique (4) de l'unité d'entraînement est monté sur le boîtier de commande (32).

6. Unité d'actionnement selon la revendication 5, **caractérisée en ce que** le moteur (4) présente un axe de moteur (M) qui est disposé à distance parallèlement à l'axe d'actionnement (A).

7. Unité d'actionnement selon la revendication 6, **caractérisée en ce que** l'unité de commande (8) s'étend entre l'axe du moteur (M) et l'évidement (34).

8. Unité d'actionnement selon l'une quelconque des revendications précédentes, **caractérisée en ce que** l'élément d'actionnement (35) peut être entraîné en rotation par l'unité d'entraînement (4) autour de l'axe d'actionnement (L).

9. Unité d'actionnement selon l'une quelconque des revendications précédentes, **caractérisée en ce que** l'élément d'actionnement (35) peut être déplacé linéairement par l'unité d'entraînement (4) dans la direction de l'axe d'actionnement (A).

10. Système de direction (1) pour un véhicule à moteur, comprenant au moins une unité d'entrée (2) pour entrer des commandes de direction, et une unité d'actionnement électrique (3, 7) qui comporte une unité d'entraînement électrique (4) qui est reliée à une unité de commande (8) et qui est configurée pour convertir des signaux de commande électriques en un mouvement mécanique d'un élément d'actionnement (35, 21), **caractérisé en ce que**
l'unité d'actionnement (3, 7) est configurée selon l'une quelconque des revendications 1 à 9.

11. Système de direction selon la revendication 10, **caractérisé en ce que** l'unité d'actionnement (3) comporte un actionneur de direction.

12. Système de direction selon la revendication 10, **caractérisé en ce que** l'unité d'actionnement (7) est reliée de manière opérationnelle à un moyen d'entrée de direction (21, 22).

13. Système de direction selon l'une quelconque des revendications 10 à 12, **caractérisé en ce qu'**il se présente sous la forme d'un système de direction assistée ou d'un système de direction à commande électrique.
